# EUROPEAN PATENT SPECIFICATION

(11) **EP 2 360 047 B1**
(45) Date of publication and mention of the grant of the patent: **25.07.2012**
(21) Application number: 11150010.4
(22) Date of filing: 03.01.2011
(51) Int. Cl.: B60K 17/04

(54) **Vehicle drive unit for dump truck**
Fahrzeugantriebseinheit für Kipper
Unité de commande de véhicule pour camion-benne

(30) Priority: 15.02.2010 JP 2010029934
(43) Date of publication of application: 24.08.2011
(73) Proprietor: Hitachi Construction Machinery Co., Ltd., Tokyo 112-0004 (JP)
(72) Inventor: Shinohara, Takeshi c/o Intellectual Property Department,, Ibaraki 300-0013 (JP); Masuda, Hayato c/o Intellectual Property Department,, Ibaraki 300-0013 (JP); Shibukawa, Takeshi c/o Intellectual Property Department,, Ibaraki 300-0013 (JP)
(74) Representative: MERH-IP Matias Erny Reichl Hoffmann

(56) References cited:
- US-A1- 2004 065 169
- US-A1- 2009 312 135

## Description

### TECHNICAL FIELD

The present invention relates to a vehicle drive unit for a dump truck for driving drive wheels of a large-sized dump truck a vehicle body weight of which exceeds 100 tons.

### BACKGROUND ART

In general, a large-sized dump truck for carrying crushed stones excavated in a mine is provided with a liftable vessel (loading platform) on a frame of a vehicle body, and carries heavy baggage such as crushed stones in a state where a large volume of the heavy baggage is loaded on the vessel.

A vehicle drive unit of a dump truck is typically configured to be provided with wheels in each of which a tire is installed, a cylindrical spindle inserted inside the wheel, wheel bearings located between an outer peripheral surface of the spindle and an inner peripheral surface of the wheel to rotatably support the wheel, a rotational source disposed at one end side of the spindle to drive a rotational shaft, a shaft connected to the rotational shaft of the rotational source and inserted into an inner peripheral side of the spindle to axially project from the other end of the spindle, and a reduction gear disposed at the other end side of the spindle to transmit power from the shaft to the wheel in a state of being immersed in lubricant oil.

In this case, a shaft bearing is provided in an open end side of the spindle for rotatably supporting the shaft, and the shaft bearing is arranged at a position adjacent to the reduction gear (US Patent Application Publication No. 2004/0065169 Specification).

US 2009/0312135 A1 discloses a vehicle drive unit according to the preamble of claim 1.

### SUMMARY OF THE INVENTION

Incidentally in the conventional vehicle drive unit, the shaft bearing is disposed at a distal end side of the shaft to be close to the reduction gear. Such arrangement of the shaft bearing at a position closer to the distal end side of the shaft than an intermediate portion of the shaft raises a problem that a centrifugal force acting on the shaft at high-speed rotation thereof facilitates generation of deflection in the shaft to degrade reliability and durability of the shaft.

On the other hand, in a case where the shaft bearing is disposed in the intermediate portion of the shaft, there is a problem that a lubrication defect occurs in the shaft bearing. That is, in the conventional vehicle drive unit, the shaft bearing is disposed in a position adjacent to the reduction gear, therefore allowing supply of lubricant oil from the reduction gear to the shaft bearing at the driving of the dump truck. In contrast, in a case where the shaft bearing is disposed in the intermediate portion of the shaft, since the shaft bearing is disposed in a position away from the reduction gear, the lubricant oil can not be supplied from the reduction gear to the shaft bearing.

In the vehicle drive unit for the dump truck, for restricting a temperature rise caused by stirring the lubricant oil inside the vehicle drive unit, an oil surface of the lubricant oil in the vehicle drive unit is set in a position lower than the shaft bearing. Therefore the lubrication brought out by immersion of the shaft bearing into the lubricant oil can not be expected.

The present invention is made in view of the foregoing problem in the conventional art and an object of the present invention is to provide a vehicle drive unit for a dump truck which can prevent deflection of a shaft to improve reliability and durability thereof and can sufficiently lubricate a shaft bearing.

### MEANS FOR SOLVING THE PROBLEM

(1) In order to solve the aforementioned problems, the present invention is applied to a vehicle drive unit for a dump truck comprising a wheel in which a tire is installed, a cylindrical spindle inserted inside the wheel, wheel bearings provided between an outer peripheral surface of the spindle and an inner peripheral surface of the wheel to rotatably support the wheel, a rotational source disposed at one end side of the spindle to drive a rotational shaft, a shaft connected to the rotational shaft of the rotational source and inserted into an inner peripheral side of the spindle to axially project from the other end of the spindle, and a reduction gear disposed at the other end side of the spindle to transmit power from the shaft to the wheel in a state of being immersed in lubricant oil.

The invention according to claim 1 is characterized in that a shaft bearing is provided on an axial intermediate portion of the shaft to be positioned in an inner peripheral side of the spindle for rotatably supporting the shaft to the spindle, a spindle side oil supplying passage is formed in a top portion of the spindle for establishing communications between an outer peripheral side and the inner peripheral side of the spindle, the lubricant oil supplied to the top portion of the spindle by rotation of the wheel is introduced to the shaft bearing by use of the spindle side oil supplying passage.

With this arrangement, the lubricant oil supplied on the top portion of the spindle by the rotation of the wheel flows into a shaft bearing rolling surface through the spindle side oil supplying passage to lubricate the shaft bearing. The lubricant oil which has lubricated the shaft bearing is discharged into the spindle inside. Therefore, the lubricant oil in the reduction gear can be used to appropriately lubricate the shaft bearing and improve durability of the shaft bearing. As a result, the deflection of the shaft supported by the shaft bearing can be prevented for a long period of time to improve the reliability and durability of the shaft.

(2) In this case, according to the present invention, the spindle side oil supplying passage is preferably provided in a position as opposed to the shaft bearing in the upper and lower directions. With this arrangement, since the lubricant oil introduced from the spindle top portion to the spindle side oil supplying passage flows down toward the shaft bearing as opposed to the spindle side oil supplying passage in the upper and lower directions, the shaft bearing can be efficiently lubricated with a sufficient amount of the lubricant oil.

(3) According to the present invention, a retainer is preferably provided in the inner peripheral side of the spindle for retaining the shaft bearing wherein a retainer side oil supplying passage is preferably formed in the retainer for introducing the lubricant oil flown out from the spindle side oil supplying passage into a rolling surface of the shaft bearing.

With this arrangement, the lubricant oil introduced from the top portion of the spindle to the spindle side oil supplying passage can be efficiently supplied through the retainer side oil supplying passage to the shaft bearing to securely lubricate the rolling surface of the shaft bearing. Since the retainer is formed of a component different from the spindle, the machining onto the spindle for retaining the shaft bearing can be facilitated to reduce manufacturing costs.

(4) According to the present invention, the retainer preferably has an outer peripheral surface on which one end side of the retainer side oil supplying passage is opened and which preferably includes a guide groove formed thereon for flowing down the lubricant oil supplied from the spindle side oil supplying passage to the one end side of the retainer side oil supplying passage.

With this configuration, a large amount of the lubricant oil can be guided to the retainer side oil supplying passage along the guide groove formed on the outer peripheral surface of the retainer to efficiently lubricate the shaft bearing. Therefore, it is possible to provide the retainer side oil supplying passage in a position, not directly under the spindle side oil supplying passage but spaced circumferentially therefrom. As a result, the configuration of the retainer can be made in such a manner as to be excellent in machining and assembling properties to achieve reduction in the manufacturing costs of the entire vehicle drive unit.

(5) According to the present invention, the retainer side oil supplying passage preferably has an opening width dimension at the one end side set larger than a width dimension of the guide groove in the retainer. As a result, the lubricant oil supplied from the spindle side oil supplying passage to the guide groove can be efficiently introduced to the retainer side oil supplying passage. Therefore, the shaft bearing can be stably lubricated to improve durability of the shaft bearing.

(6) According to the present invention, an intermediate oil reservoir is preferably formed on an outer peripheral surface of the retainer to be positioned between the spindle side oil supplying passage and the retainer side oil supplying passage for reserving the lubricant oil. With this configuration, the oil can be reserved in the intermediate oil reservoir provided on the outer peripheral surface of the retainer to stably supply the lubricant oil to the shaft bearing regardless of a driving condition of the dump truck. In consequence, reliability of the shaft bearing can be improved.

(7) The present invention may be configured in such a manner that the shaft and/or the retainer is preferably provided with a collar portion positioned in the rotational source side among axially both sides of the shaft bearing for restricting the lubricant oil supplied to the shaft bearing to flow out to the rotational source side.

With this arrangement, the collar portion can restrict the lubricant oil supplied to the shaft bearing to flow out to the rotational source side or to the rotational source side along the shaft after lubricating the shaft bearing.

(8) The present invention may be configured in such a manner that the shaft bearing preferably comprises an inner race rotating together with the shaft, an outer race fixed to the spindle side, and/or rolling bodies provided between the inner race and the outer race to rotatably support the inner race, wherein a through hole is preferably formed in the outer race of the shaft bearing to radially penetrate therein for establishing communications between the through hole and the retainer side oil supplying passage of the retainer.

With this configuration, the lubricant oil supplied from the spindle side oil supplying passage to the retainer side oil supplying passage passes the through hole provided in the outer race of the shaft bearing and is then supplied on the rolling surface of the rolling body.
In this way, since the lubricant oil can be directly supplied on the rolling surface of the rolling body for the lubricant oil to be the most required in the shaft bearing, it is possible to enhance the durability of the shaft bearing.

(9) In a case of the above (8), the shaft bearing preferably includes a seal provided only at the rotational source side among the axially both sides thereof. As a result, it is possible to restrict the lubricant oil supplied to the shaft bearing to flow out into the rotational source side or to the rotational source side along the shaft after lubricating the shaft bearing. Therefore, in a case of using an electric motor as the rotational source, damages of the electric motor by the inflow of the lubricant oil can be prevented before happening to enhance reliability of the vehicle drive unit. Since the lubricant oil which has lubricated the shaft bearing is discharged from the shaft bearing at the side where the seal is not provided, it is possible to reduce a rolling resistance of the shaft bearing.

(10) According to the present invention, an initial oil reservoir is preferably provided on the top portion of the spindle to be positioned at the outer peripheral side of the spindle for reserving the lubricant oil to be supplied to the spindle side oil supplying passage.

With this arrangement, the lubricant oil scattered on the spindle can be collected by use of the initial oil reservoir to be efficiently introduced to the spindle side oil supplying passage. Further, also in a case where a supply amount of the lubricant oil to be supplied into the top portion of the spindle is reduced by a change of a driving condition of the dump truck, the lubricant oil reserved in the initial oil reservoir can be stably supplied to the spindle side oil supplying passage. In consequence, the shaft bearing can be appropriately lubricated regardless of the driving condition of the dump truck to enhance reliability of the vehicle drive unit.

### BRIEF DISCRIPTION OF THE DRAWINGS

Fig. 1 is a side view showing a dump truck to which a vehicle drive unit according to a first embodiment of the present invention is applied.
Fig. 2 is an enlarged rear view showing the dump truck, taken along the direction of arrows of II-II in Fig. 1.
Fig. 3 is a longitudinal sectional view showing the vehicle drive unit for the dump truck, taken along the direction of arrows of III-III in Fig. 1.
Fig. 4 is an enlarged longitudinal sectional view showing a spindle, a wheel drive motor, a shaft, a shaft bearing and the like in Fig. 3.
Fig. 5 is a perspective view showing a retainer in Fig. 4 as a single unit.
Fig. 6 is a transverse sectional view showing the spindle, the shaft, the retainer, the shaft bearing and the like, taken along the direction of arrows VI-VI in Fig. 4.
Fig. 7 is an enlarged longitudinal sectional view showing essential portions such as a spindle side oil supplying passage, a retainer side oil supplying passage, a guide groove, and the shaft bearing and the like, taken along the direction of arrows VII-VII in Fig. 6.
Fig. 8 is a longitudinal sectional view similar to Fig. 7 showing essential portions such as a spindle side oil supplying passage, an initial oil reservoir, a retainer side oil supplying passage, an intermediate oil reservoir, and a shaft bearing and the like according to a second embodiment.
Fig. 9 is a longitudinal sectional view similar to Fig. 7 showing essential portions such as a spindle side oil supplying passage, a retainer side oil supplying passage, a shaft bearing, a through hole, and a seal and the like according to a third embodiment.

### MODE FOR CARRYING OUT THE INVENTION

Hereinafter, a vehicle drive unit for a dump truck according to embodiments of the present invention will be explained in greater detail with reference to the accompanying drawings.

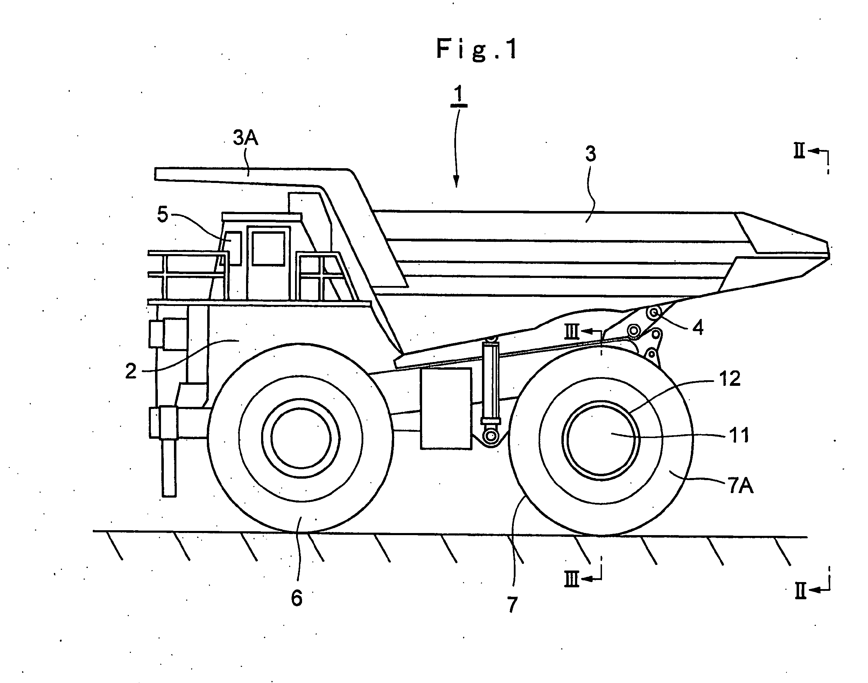

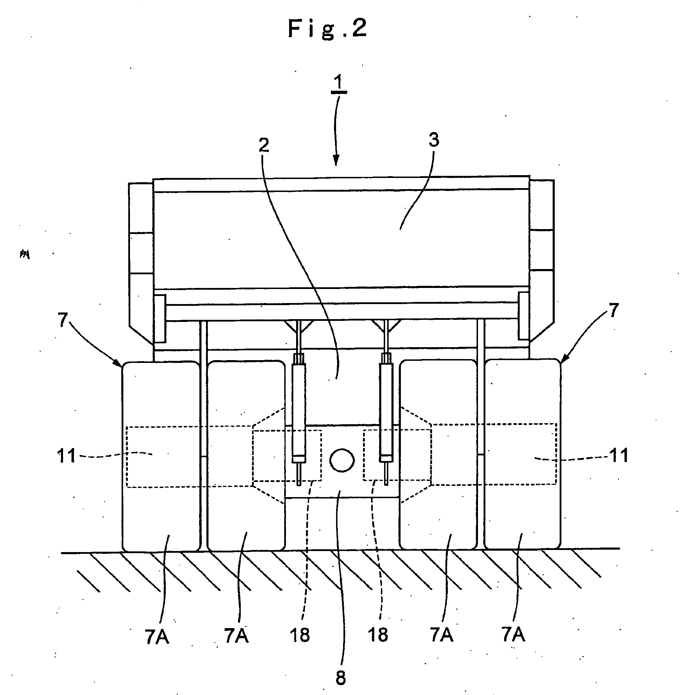

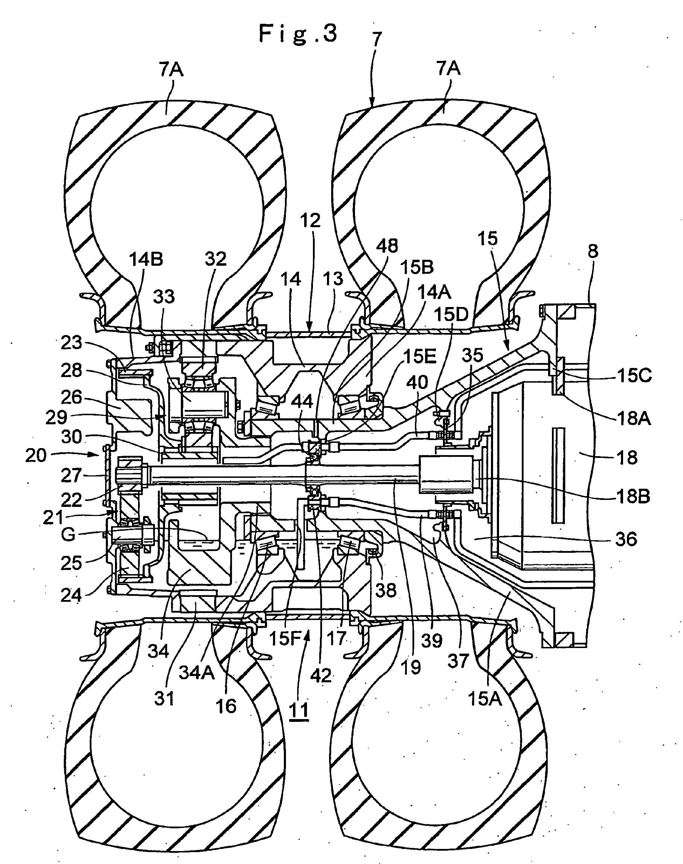

First, Fig. 1 to Fig. 7 show a first embodiment of a vehicle drive unit for a dump truck according to the present invention.

In the figure, designated at 1 is a dump truck. The dump truck 1 is largely constituted by a vehicle body 2 self-propelled by front wheels 6 and rear wheels 7 to be described later and a vessel 3 (loading platform) liftably mounted on the vehicle body 2.

The vessel 3 is formed as a container for loading a large volume of heavy baggage such as crushed stones. A rear-side bottom portion of the vessel 3 is liftably (tiltably) coupled to a rear end side of the vehicle body 2 through pin coupling portions 4. A protector 3A extending forward is integrally provided in a front side top portion of the vessel 3 in such a manner as to cover a cabin 5 disposed at a front portion side of the vehicle body 2 from above.

An engine, a generator (neither shown) and the like are mounted on the vehicle body 2, wherein the generator is driven by the engine to supply power from the generator to a wheel drive motor 18 to be described hereinafter.

Indicated at 6 are right and left front wheels which are provided rotatably on the front portion side of the vehicle body 2, and the right and left front wheels 6 constitute steered wheels which are steered (steering operation) by an operator of the dump truck 1. The front wheel 6 is formed in a tire diameter (outside diameter dimension) as long as 2 to 4 meters in the same way as rear wheels 7 to be described hereinafter.

Indicated at 7 are right and left rear wheels which are rotatably provided on the rear portion side of the vehicle body 2, and the right and left rear wheels 7 constitute drive wheels of the dump truck 1 which are driven by a vehicle drive unit 11 to be described hereinafter. Each rear wheel 7 is constituted by two tires 7A, a wheel 12, which will be described later, to which the respective tires 7A are installed, and the like.

Designated at 8 is an axle housing for the rear wheel 7, which is provided at the lower side of the rear portion of the vehicle body 2. The axle housing 8 is formed in a tubular body which extends in left and right directions between the left and right rear wheels 7. The axle housing 8 is attached to the lower side of the rear portion of the vehicle body 2 through a shock absorber (not shown), and spindles 15 are fixed at both end side in left and right directions of the axle housing 8, as described hereinafter.

Next, a specific explanation will be made of the vehicle drive unit 11 which is mounted to the dump truck 1 and applied to the first embodiment.

That is, designated at 11 is the vehicle drive unit provided at each of the left and right rear wheels 7 of the dump truck 1. The vehicle drive unit 11 is constituted by the wheel 12, the spindle 15, wheel bearings 16 and 17, a wheel drive motor 18, a shaft 19, a reduction gear 20, a shaft bearing 44 and the like. The vehicle drive unit 11 decelerates rotation of the wheel drive motor 18 by the reduction gear 20 and drives each of the left and right rear wheels 7 as drive wheels by large rotational torque for traveling. It should be noted that the vehicle drive units 11 provided in the left and right rear wheels 7 are formed of the same configuration and therefore the vehicle drive unit 11 provided in the left rear wheel 7 will be hereinafter explained.

Denoted at 12 is the wheel to which the tires 7A of the rear wheel 7 are installed, and the wheel 12 is largely constituted by a cylindrical rim 13 which is formed cylindrically to extend left and right directions and on which two tires 7A are mounted in parallel and a wheel support member 14 provided to be fixed to the inner peripheral side of the rim 13.

The wheel support member 14 is positioned in an axial (left and right directions) intermediate portion of the rim 13 and is constituted by a bearing mounting portion 14A on which wheel bearings 16 and 17 to be described later are mounted and an outer side drum portion 14B which is positioned axially outside of the rim 13 (opposite side to the axle housing 8) and is fixed to the bearing mounting portion 14A through an internal gear 31 to be described hereinafter.

Denoted at 15 is the spindle inserted into an inside of the wheel 12, and the spindle 15 is fixed to the axle housing 8 and rotatably supports the wheel 12 through the wheel bearings 16 and 17 to be described hereinafter. Here, the spindle 15 is formed as a tapered cylindrical body extending in the left and right directions as a whole and is constituted by a tapered large diameter cylinder portion 15A positioned at one side in axial direction (side of the axle housing 8) and a small diameter cylinder portion 15B positioned at the other side in axial direction. The large diameter cylinder portion 15A of the spindle 15 is fixed to the axle housing 8 by the use of bolts and the wheel bearings 16 and 17 to be described later are mounted on the outer peripheral side of the small diameter cylinder portion 15B.

Here, a motor mounting seat 15C projecting radially inward is formed integrally with the large diameter cylinder portion 15A at one end side in axial direction and the wheel drive motor 18 to be described later is mounted on the motor mounting seat 15C. A circular mounting flange 15D projecting radially inward is formed integrally with the axial intermediate portion of the large diameter cylinder portion 15A at the inner peripheral side and a partition wall 35 to be described later is mounted in the mounting flange 15D.

On the other hand, the other end side of the small diameter cylinder portion 15B is an open end and a second-stage carrier 34 to be described later is mounted in the other end side of the small diameter cylinder portion 15B. A circular intermediate flange 15E is provided integrally with the axial intermediate portion of the small diameter cylinder portion 15B at the inner peripheral side. A radial hole 15F penetrating radially (upper and lower directions) through a lower portion side of the small diameter cylinder portion 15B is formed in the lower portion side of the small diameter cylinder portion 15B which is closer to the axial other side than the intermediate flange 15E. Further, a spindle side oil supplying passage 48 to be described later is formed in an upper portion side of the small diameter cylinder portion 15B in a position corresponding to the shaft bearing 44 to be described later in the vicinity of the intermediate flange 15E.

Denoted at 16 and 17 are the left and right wheel bearings provided between the outer peripheral surface of the spindle 15 and the inner peripheral surface of the wheel 12. The left and right wheel bearings 16 and 17 rotatably support the wheel 12 around the spindle 15.
The left and right wheel bearings 16 and 17 are arranged to be spaced axially (left and right directions) from each other between the outer peripheral surface of the small diameter cylinder portion 15B constituting the spindle 15 and the inner peripheral surface of the bearing mounting portion 14A constituting the wheel support member 14 of the wheel 12.

Denoted at 18 is the wheel drive motor as the rotational source detachably mounted in the one end side of the spindle 15, and the wheel drive motor 18 is configured by a large sized electric motor driven by power supply from a power generator (not shown) mounted on the vehicle body 2. The wheel drive motor 18 includes a plurality of mounting flanges 18A at the outer peripheral side and the mounting flanges 18A are detachably mounted in the motor mounting seat 15C of the spindle 15 by use of bolts. Here, the wheel drive motor 18 rotates the rotational shaft 18B in the forward direction or in the reverse direction by supplying power from the power generator thereto and rotates the shaft 19, which will be described later, connected to the rotational shaft 18B.

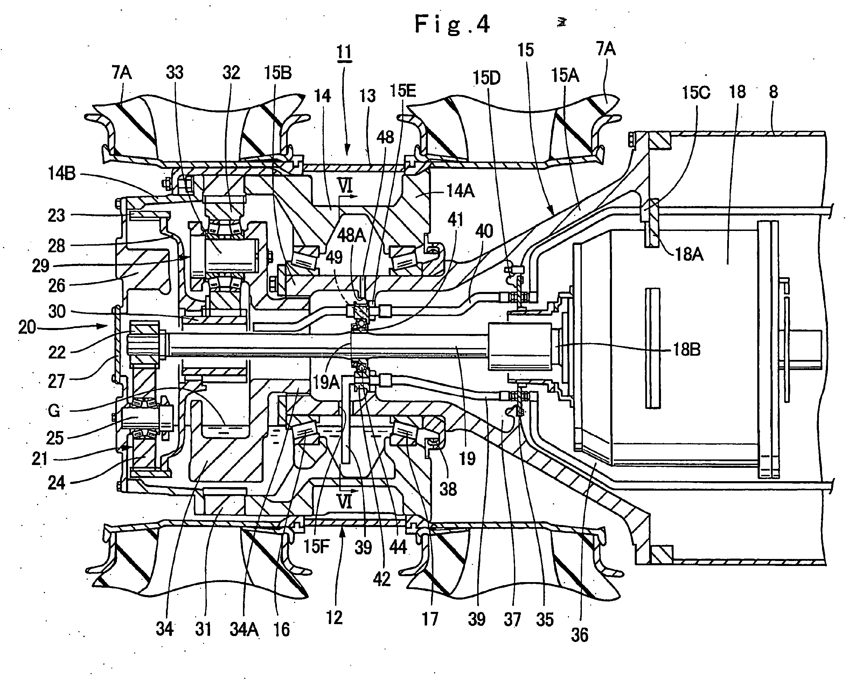

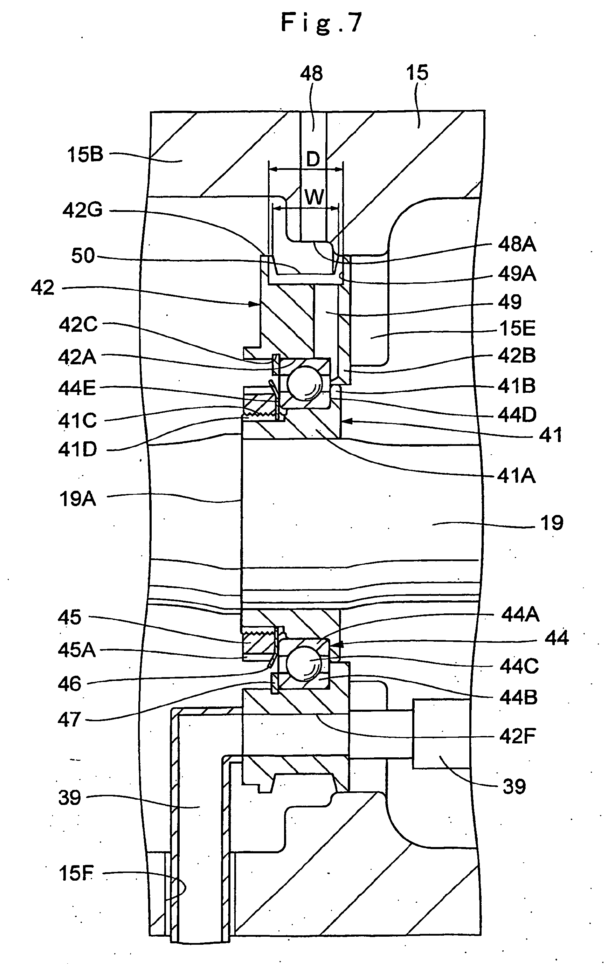

Denoted at 19 is the shaft connected to the rotational shaft 18B of the wheel drive motor 18, and the shaft 19 is rotated in the forward direction or in the reverse direction by the wheel drive motor 18. The shaft 19 is configured by a single elongated bar-like body extending in the left and right directions in the inner peripheral side of the spindle 15 and one end side of the shaft 19 is connected to the rotational shaft 18B of the wheel drive motor 18. On the other hand, the other end side of the shaft 19 projects from the other end side of the small diameter cylinder portion 15B constituting the spindle 15 and a sun gear to be described later is mounted in the other end side of the shaft 19. An axial intermediate portion 19A of the shaft 19 (see Fig. 4 and Fig. 7) positioned between the left and right wheel bearings 16 and 17 is rotatably supported by the shaft bearing 44 to be described hereinafter.

Next, designated at 20 is the reduction gear disposed in the other end side of the spindle 15 and the reduction gear 20 decelerates rotation of the wheel drive motor 18 transmitted through the shaft 19 and rotates the wheel 12 with large power (torque) obtained by the deceleration. Here, the reduction gear 20 is constituted by a first-stage planetary gear reduction mechanism 21 and a second-stage planetary gear reduction mechanism 29 which will be described hereinafter.

Denoted at 21 is the first-stage planetary gear reduction mechanism constituting the reduction gear 20. The planetary gear reduction mechanism 21 is constituted by the sun gear 22 which is connected to the other end portion of the shaft 19 by means of a spline coupling, three planetary gears 24 (only one of which is shown in the figure) which are meshed with the sun gear 22 and a ring-shaped internal gear 23, and a carrier 26 which rotatably supports the respective planetary gears 24 through support pins 25.

In this case, the carrier 26 is detachably fixed in its outer peripheral side to an open end (an end surface at an axially outside) of the outer side drum portion 14B constituting the wheel support member 14 by the use of bolts, and rotates integrally with the wheel support member 14. On the other hand, a disk-shaped lid plate 27 is detachably mounted to the inner peripheral side of the carrier 26, and the lid plate 27 is removed from the carrier 26, for example, at the time of inspection of meshing portions between the sun gear 22 and the planetary gears 24.

The ring-shaped internal gear 23 is formed as a tubular gear with a short diameter so as to circumvent the sun gear 22, the respective planetary gears 24 and the like from a radially outside, and is relatively rotatably disposed as having a narrow radial gap to an inner peripheral surface of the outer side drum portion 14B. The internal teeth on the entire inner peripheral side of the internal gear 23 are all the time meshed with the respective planetary gears 24.

As the sun gear 22 is rotated integrally with the rotational shaft 19 by the wheel drive motor 18, the first-stage planetary gear reduction mechanism 21 converts the rotation of the sun gear 22 into a rotating movement on its axis and a revolving movement of each planetary gear 24. Further, the rotating movement on its axis (rotation) of each planetary gear 24 is transmitted to the ring-shaped internal gear 23 as a decelerated rotation. The rotation of the internal gear 23 is transmitted to the second-stage planetary gear reduction mechanism 29 through a coupling 28 to be described hereinafter.

On the other hand, the revolving movement of each planetary gear 24 is transmitted to the outer side drum portion 14B of the wheel support member 14 by way of rotation of the carrier 26. However, since the wheel support member 14 rotates integrally with a second-stage internal gear 31 to be described later, the revolving movement of each planetary gear 24 is suppressed into rotation in synchronization with the internal gear 31 (the wheel support member 14).

Indicated at 28 is the coupling rotating integrally with the first-stage internal gear 23. The coupling 28 is in the form of an annular plate which is disposed between the first-stage planetary gear reduction mechanism 21 and the second-stage planetary gear reduction mechanism 29, and an outer peripheral side of the coupling 28 is coupled with the first-stage internal gear 23 by means of a spline coupling. An inner peripheral side of the coupling 28 is coupled with a second-stage sun gear 30 to be described later by means of a spline coupling.

Thus, the coupling 28 transmits rotation of the first-stage internal gear 23 to the second-stage sun gear 30 to rotate the sun gear 30 integrally with the first-stage internal gear 23. A plural number of oil holes (not shown) can be formed in the coupling 28 to circulate lubricant oil G to be described hereafter.

Denoted at 29 is the second-stage planetary gear reduction mechanism. This planetary gear reduction mechanism 29 is disposed between the shaft 19 and the wheel support member 14 through the first-stage planetary gear reduction mechanism 21 and decelerates the rotation of the shaft 19 together with the first-stage planetary gear reduction mechanism 21. The second-stage planetary gear reduction mechanism 29 is constituted by the tubular sun gear 30 which is mounted coaxially with the shaft 19 and rotates integrally with the coupling 28, three planetary gears 32 (only one is shown) which are meshed with the sun gear 30 and the ring-shaped internal gear 31, and a carrier 34 which rotatably supports the respective planetary gears 32 through support pins 33.

Here, the second-stage internal gear 31 is formed as a tubular gear with a short diameter in such a manner as to circumvent the sun gear 30, the respective planetary gears 32, and the like from a radially outside and is integrally fixed between bearing mounting portion 14A constituting the wheel support member 14 and the outer side drum portion 14B. Further, internal teeth formed over the entire inner peripheral side of the internal gear 31 are meshed with the respective planetary gears 32 all the time.

The second-stage carrier 34 is integrally formed with a cylindrical portion 34A at its inner central portion, in fitting engagement with the small diameter cylinder portion 15B of the spindle 15. This cylindrical portion 34A is detachably coupled with an inner peripheral side of the small diameter cylinder portion 15B by means of a spline coupling. The shaft 19 is inserted into the inner peripheral side of the cylindrical portion 34A together with a supply pipe 40 to be described hereinafter.

Therefore, in the second-stage planetary gear reduction mechanism 29, the cylindrical portion 34A of the carrier 34 is fixed to the small diameter cylinder portion 15B of the spindle 15 by means of a spline coupling, thereby restraining revolving movements of the respective planetary gears 32 (rotation of the carrier 34). Therefore, as the sun gear 30 of the second-stage planetary gear reduction mechanism 29 is put in rotation integrally with the coupling 28, the rotation of the sun gear 30 is transmitted to the rotation of each of the planetary gears 32, which only rotates on its axis without the revolving movement in a state of being meshed with the internal gear 31. As a result, the rotation of each of the planetary gears 32 on its axis is transmitted to the second-stage internal gear 31, which is decelerated for rotation. As a consequence, by the two-stage speed reduction through the first and second-stage planetary gear reduction mechanisms 21 and 29, large output of the rotational torque is transmitted to the wheel support member 14 in which the internal gear 31 is fixed.

Here, the lubricant oil G is reserved inside the wheel support member 14, and the respective planetary gear reduction mechanisms 21 and 29 are configured to operate in a state of being all the time immersed in the lubricant oil G. In this case, an oil surface of the lubricant oil G is lower than the lowest portion of the small diameter cylinder portion 15B constituting the spindle 15 and is set in a position where a lower end side of each of the wheel bearings 16 and 17 is immersed. In consequence, at the time of operating the vehicle drive unit 11, the lubricant oil G can be stirred by the respective planetary gear reduction mechanisms 21 and 29 to restrict a temperature rise and a stirring resistance (viscosity resistance) of the lubricant oil G can be restricted.

Indicated at 35 is a partition wall provided in the spindle 15. The partition wall 35 is formed of an annular plate and is fixed at its outer peripheral side to the mounting flange 15D of the spindle 15 by the use of bolts. The partition wall 35 is defined to divide an inside of the spindle 15 into a motor accomodating section 36 positioned at its axial one side for accommodating the wheel drive motor 18 and a tubular space section 37 positioned at its axial other side for communicating with the inside of the wheel support member 14 all the time.

Indicated at 38 is a seal device for establishing liquid-tight seal between the spindle 15 and the wheel support member 14, and the seal device 38 is configured by a floating seal. This seal device 38 is operable to restrict the lubricant oil G reserved in the wheel support member 14 to be leaked outside and prevent sand and earth, rain water, and the like from entering into the wheel support member 14.

Indicated at 39 is a collection pipe extending from the inside of the spindle 15 into the inside of the wheel support member 14, and the collection pipe 39 collects the lubricant oil G reserved in the wheel support member 14. A base end side of the collection pipe 39 is connected to a suction side of a lubricating pump (not shown). A distal end side of the collection pipe 39 bends downward in an L-shape away from a lower side of the shaft 19 after penetrating through a pipe mounting hole 42F of a retainer 42 to be described later and protrudes through the radial hole 15F of the spindle 15 into the wheel support member 14.

Indicated at 40 is a supply pipe disposed above the collection pipe 39 to extend from the inside of the spindle 15 to the inside of the wheel support member 14. The supply pipe 40 supplies lubricant oil G toward the planetary gear reduction mechanisms 21 and 29. A base end side of the supply pipe 40 is connected to an output side of the lubricating pump (not shown). A distal end side of the supply pipe 40 penetrates through the pipe mounting hole 42E of the retainer 42 to be described later, further extends axially above the shaft 19, and protrudes through the small diameter cylinder portion 15B of the spindle 15 into the wheel support member 14.

The lubricant oil G in the wheel support member 14 is collected through the collection pipe 39 by operating the lubricating pump, cooled by an oil cooler (not shown), and is thereafter supplied through the supply pipe 40 to the planetary gear reduction mechanisms 21 and 29, thus lubricating the planetary gear reduction mechanisms 21 and 29.

Denoted at 41 is a sleeve positioned at the intermediate portion 19A of the shaft 19 and provided integrally with the shaft 19, which constitutes a part of the shaft 19. Here, as shown in Fig. 7, the sleeve 41 is formed in a stepped cylindrical shape as a whole, and the sleeve 41 is constituted by a cylindrical bearing fitting portion 41A positioned in the axial intermediate portion 19A of the shaft 19, a disk-shaped sleeve collar portion 41B having a diameter larger than that of the bearing fitting portion 41A, a male screw portion 41C positioned as opposite to the sleeve collar portion 41B to sandwich the bearing fitting portion 41A in between, and a groove portion 41D formed by axially notching a part of the male screw portion 41C. The sleeve 41 is united with the shaft 19 by press-fitting the inner peripheral side of the sleeve 41 into the intermediate portion 19A of the shaft 19.

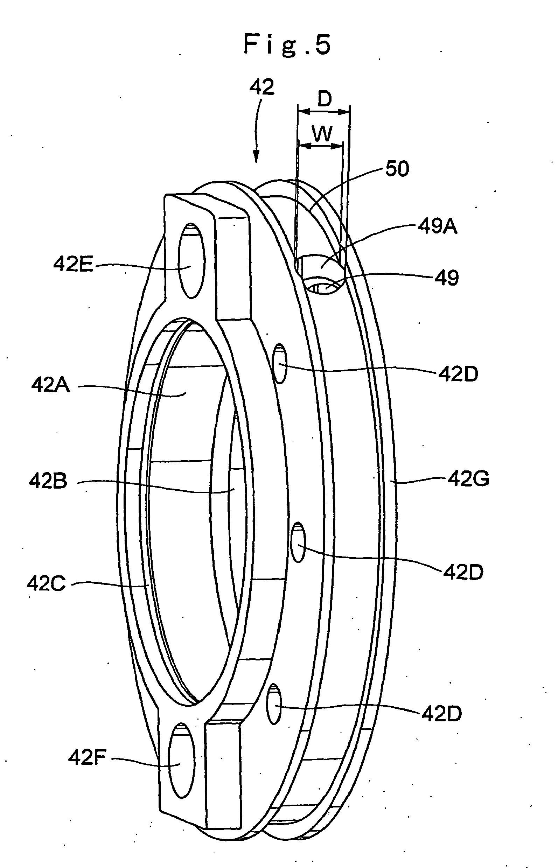

Denoted at 42 is the retainer disposed in the inner peripheral side of the spindle 15, which is configured to retain an outer race 44B of the shaft bearing 44 to be described hereinafter. Here, as shown in Fig. 5 to Fig. 7, the retainer 42 is formed of a short diameter cylindrical body as a whole. The retainer 42 is constituted by a bearing fitting hole portion 42A into which the outer race 44B of the shaft bearing 44 to be described later is fitted, and a disk-shaped retainer collar portion 42B extended from the inner peripheral side of the bearing fitting hole portion 42A to the radially inside. An annular groove portion 42C is formed on the inner peripheral surface of the bearing fitting hole portion 42A for mounting a stop ring 47 to be described hereinafter.

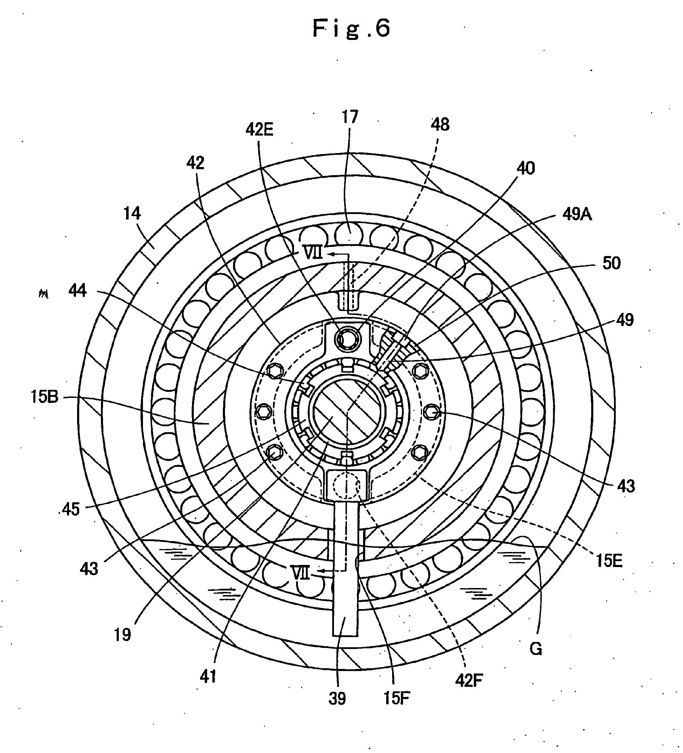

Here, a plurality of bolt through holes 42D is formed in the retainer 42 to axially penetrate therethrough. The bolts 43 (see Fig. 6) inserted into the respective bolt through holes 42D are threaded into an intermediate flange 15E of the spindle 15 to fix the retainer 42 to the inner peripheral side of the spindle 15. The two pipe mounting holes 42E and 42F are formed in the retainer 42 at its upper and lower sides to sandwich the bearing fitting hole portion 42A in between. The midway portion of the supply pipe 40 is mounted in the upper pipe mounting hole 42E and the distal end portion of the collection pipe 39 is mounted in the lower pipe mounting hole 42F.

Further, a retainer side oil supplying passage 49 to be described later is provided in the retainer 42 to axially penetrate from the outer peripheral surface 42G toward the bearing fitting hole portion 42A and a guide groove 50 to be described later is provided on the outer peripheral surface 42G of the retainer 42.

Denoted at 44 is the shaft bearing provided between the sleeve 41 and the retainer 42, which rotatably supports the intermediate portion 19A of the shaft 19 through the sleeve 41. The shaft bearing 44 is constituted by an inner race 44A fitting into the bearing fitting portion 41A of the sleeve 41, the outer race 44B fitting into the bearing fitting hole portion 42A of the retainer 42, and a large number of rolling bodies 44C rotatably provided between the inner race 44A and the outer race 44B. In this case, an axial one side end surface 44D of the shaft bearing 44 contacts with the sleeve collar portion 41B of the sleeve 41 and an axial other side end surface 44E of the shaft bearing 44 is axially pressed by a nut 45 to be described hereinafter.

Here, the intermediate portion 19A of the shaft 19 is supported by the shaft bearing 44. Therefore, the intermediate portion 19A of the shaft 19 is fixed on the inner peripheral side of the bearing fitting portion 41A in the sleeve 41. On the other hand, the inner race 44A of the shaft bearing 44 is positioned axially between the sleeve collar portion 41B of the sleeve 41 and the nut 45 by threading the nut 45 into the male screw portion 41C of the sleeve 41 in a state of being fitted into the outer peripheral side of the bearing fitting portion 41A in the sleeve 41. It should be noted that indicated at 46 is a rotation-preventing plate provided between the other side end surface 44E of the shaft bearing 44 and the nut 45. The rotation-preventing plate 46 prevent the nut 45 from rotating to the sleeve 41 by engaging the rotation-preventing plate 46 to the groove portion 41D of the sleeve 41 and the groove portion 45A provided in the nut 45.

Next, in a state where the bearing fitting hole portion 42A of the retainer 42 is fitted in the outer race 44B of the shaft bearing 44, the stop ring 47 is mounted to the annular groove portion 42C of the retainer 42. As a result, the outer race 44B of the shaft bearing 44 is axially positioned between the retainer collar portion 42B and the stop ring 47. In this state, the bolts 43 are inserted into the respective bolt through holes 42D of the retainer 42 and the respective bolts 43 are threaded into the intermediate flange 15E of the spindle 15 to fix the retainer 42 to the inner peripheral side of the spindle 15.

As a result, the shaft bearing 44 is provided between the sleeve 41 fixed to the intermediate portion 19A of the shaft 19 and the retainer 42 fixed to the intermediate flange 15E of the spindle 15, thus making it possible to support the intermediate portion 19A of the shaft 19 by the shaft bearing 44. In this time, an outer peripheral edge of the sleeve collar portion 41B provided in the sleeve 41 faces an inner peripheral edge of the retainer collar portion 42B provided in the retainer 42 having a minute gap therebetween on the one side end surface 44D of the shaft bearing 44 to be relatively rotatable to each other. Accordingly, the sleeve collar portion 41B and the retainer collar portion 42B prevent the lubricant oil G supplied to the shaft bearing 44 from flowing out from a portion between the inner race 44A and the outer race 44B toward the wheel drive motor 18.

Denoted at 48 is a spindle side oil supplying passage provided in the small diameter cylinder portion 15B of the spindle 15. The spindle side oil supplying passage 48 flows down the lubricant oil G scattered on the upper surface of the spindle 15 to the retainer side oil supplying passage 49 to be described later, at the time of operating the vehicle drive unit 11. The spindle side oil supplying passage 48 is formed radially downward from the upmost portion of the small diameter cylinder portion 15B at a position confronting the shaft bearing 44 in upper and lower directions in the small diameter cylinder portion 15B between the left and right wheel bearings 16 and 17 to establish communications between an outside and an inside of the small diameter cylinder portion 15B. On the other hand, a lower end side opening 48A in the spindle side oil supplying passage 48 faces an outer peripheral surface 42G of the retainer 42.

Denoted at 49 is the retainer side oil supplying passage provided in the retainer 42 to be positioned between the spindle side oil supplying passage 48 and the shaft bearing 44. The retainer side oil supplying passage 49 serves to supply the lubricant oil G flown down through the spindle side oil supplying passage 48 to the retainer 42 to the shaft bearing 44. As shown in Fig. 6 and Fig. 7, the retainer side oil supplying passage 49 is formed at a position spaced circumferentially from the upmost portion of the retainer 42 for avoiding interference with the supply pipe 40, that is, at a position different circumferentially from that of the spindle side oil supplying passage 48 and penetrates radially from the outer peripheral surface 42G of the retainer 42 to its inner peripheral surface in a state of being inclined in the vertical direction.

One end side (upper end side) of the retainer side oil supplying passage 49 opened to the outer peripheral surface 42G of the retainer 42 constitutes a circular large diameter opening 49A having a larger diameter than that of the retainer side oil supplying passage 49, and an inner diameter dimension D (opening width dimension) of the large diameter opening 49A is set larger than a width dimension W of the guide groove 50 to be described hereinafter (D>W). The other end side (lower end side) of the retainer side oil supplying passage 49 is opened in a gap between the inner race 44A and the outer race 44B of the shaft bearing 44.

Denoted at 50 is the guide groove formed on the outer peripheral surface 42G of the retainer 42. The guide groove 50 serves to flow down the lubricant oil G introduced from the spindle side oil supplying passage 48 to the retainer 42 to the large diameter opening 49A of the retainer side oil supplying passage 49. Here, as shown in Fig. 6 and Fig. 7, the guide groove 50 has a width dimension W slightly smaller than a thickness dimension of the retainer 42 and is formed over an entire circumference of the outer peripheral surface 42G in the retainer 42.

As a result, the lubricant oil G scattered on the upper surface of the spindle 15 (small diameter cylinder portion 15B) at the time of operating the vehicle drive unit 11 flows down through the spindle side oil supplying passage 48 to the retainer 42 and thereafter is guided along the guide groove 50 formed in the outer peripheral surface 42G of the retainer 42 to the large diameter opening 49A of the retainer side oil supplying passage 49. Further, the lubricant oil G is introduced from the large diameter opening 49A to the retainer side oil supplying passage 49 and is supplied between the inner race 44A and the outer race 44B of the shaft bearing 44 through the retainer side oil supplying passage 49, thus lubricating a rolling surface of each of the rolling bodies 44.

The vehicle drive unit 11 according to the first embodiment has the aforementioned configuration, and next an operation thereof will be explained.

First, when power is supplied from the generator (not shown) mounted in the vehicle body 2 to the wheel drive motor 18, the wheel drive motor 18 is activated to rotate the shaft 19. The rotation of the shaft 19 is decelerated from the sun gear 22 of the first-stage planetary gear reduction mechanism 21 to the respective planetary gears 24 for transmission, and the rotation of each planetary gear 24 is decelerated through the internal gear 23 and the coupling 28 to the sun gear 30 of the second-stage planetary gear reduction mechanism 29 for transmission.

The rotation of the sun gear 30 of the second-stage planetary gear reduction mechanism 29 is decelerated to the respective planetary gears 32 for transmission. At this time, the carrier 34 supporting the respective planetary gears 32 is connected to the small diameter cylinder portion 15B of the spindle 15 by means of a spline coupling and therefore the revolving movements of the respective planetary gears gears 32 (rotation of the carrier 34) are restricted.

As a result, the rotation of each of the planetary gears 32 is decelerated to the internal gear 31 fixed to the wheel support member 14 for transmission, and the wheel 12 rotates by large output of the rotational torque by the two-stage speed reduction through the first and second-stage planetary gear reduction mechanisms 21 and 29. In consequence, the left and right rear wheels 7 as the drive wheel can be rotated to drive the dump truck 1.

At the time of operating the vehicle drive unit 11, since the Intermediate portion 19A of the shaft 19 Is supported by the shaft bearing 44 when the shaft 19 rotates at a high speed, a large deflection of the Intermediate portion 19A due to eccentricity of the shaft 19 can be restricted to enhance durability of the shaft 19.

Here, the first embodiment is configured to be capable of Imposing appropriate lubrication on the shaft bearing 44 supporung the shaft 19 all the time, and hereinafter, a lubricating operation to the shaft bearing 44 will be explained.

First, at the time of operating the vehicle drive unit 11, the lubricant oil G reserved In the wheel support member 14 scatters on the upper surface of the small diameter cylinder portion 15B constituting the spindle 15 by rotating the wheel support member 14 to the spindle 15. The lubricant oil G is introduced from the upper surface of the small diameter cylinder portion 15B to the spindle side oil supplying passage 48 and flows down through the lower end side opening 48A of the spindle side oil supplying passage 48 to the retainer 42.

Then, since the guide groove 50 is formed In the outer peripheral surface 42G of the retainer 42, the lubricant oil G flown down from the spindle side oil supplying passage 48 flows In the outer peripheral surface 42G of the retainer 42 along the guide groove 50 and is Introduced from the large diameter opening 49A of the retainer side oil supplying passage 49 to the retainer side oil supplying passage 49.

The lubricant-oil G Introduced Into the retainer side oil supplying passage 49 is introduced through the retainer side oil supplying passage 49 to the shaft bearing 44 to be supplied between the inner race 44A and the outer race 44B, and thereafter flows out from the other side end surface 44E into the small diameter cylinder portion 15B of the spindle 15. Therefore the rolling surface of each rolling body 44C In the shaft bearing 44 can be efficiently lubricated to enhance durability and reliability of the shaft bearing 44.

At this time, as shown In Fig. 7, the sleeve collar portion 41B Is provided In the sleeve 41 constituting a part of the shaft 19, the retainer collar portion 42B is provided in the retainer 42 retaining the shaft bearing 44, and the outer peripheral edge of the sleeve collar portion 41B faces the inner peripheral edge of the retainer collar portion 42B to have a minute gap therebetween.

In consequence, the lubricant oil G supplied through the retainer side oil supplying passage 49 to the shaft bearing 44 is blocked by the sleeve collar portion 41B and the retainer collar portion 42B on the one side end surface 44D of the shaft bearing 44. Therefore, the lubricant oil G can flow down to the side of the reduction gear 20 without flowing to the side of the wheel drive motor 18 in the small diameter cylinder portion 15B of the spindle 15 to return back through the radial hole 15F into the wheel support member 14. Accordingly, the sleeve collar portion 41B and the retainer collar portion 42B can prevent the lubricant oil G which has lubricated the shaft bearing 44 from flowing out to the side of the wheel drive motor 18 or the side of the wheel drive motor 18 along the shaft 19 to protect the wheel drive motor 18 composed of the electric motor from the lubricant oil G.

In this way, according to the first embodiment, the spindle side oil supplying passage 48 is formed in the small diameter cylinder portion 15B of the spindle 15 and the retainer side oil supplying passage 49 is provided in the retainer 42. Therefore, at the time of operating the vehicle drive unit 11, the lubricant oil G scattered on the upper surface of the spindle 15 is supplied through the spindle side oil supplying passage 48 and the retainer side oil supplying passage 49 to the shaft bearing 44. As a result, the rolling surface of each rolling body 44C in the shaft bearing 44 can be efficiently lubricated to enhance durability and reliability of the shaft bearing 44. In consequence, the deflection of the shaft 19 whose intermediate portion 19A is supported by the shaft bearing 44 can be prevented for a long period of time to enhance durability and reliability of the shaft 19, thereby making it possible to enhance reliability of the entire vehicle drive unit 11.

In this case, since the spindle side oil supplying passage 48 is provided in a position opposing the shaft bearing 44 in the upper and lower directions, the lubricant oil G introduced from the upper surface of the spindle 15 to the spindle side oil supplying passage 48 is supplied through the retainer side oil supplying passage 49 to the shaft bearing 44 without waste, so that the shaft bearing 44 can be efficiently lubricated with a large amount of the lubricant oil G.

By providing the guide groove 50 on the outer peripheral surface 42G of the retainer 42, the lubricant oil G flown down from the spindle side oil supplying passage 48 to the retainer 42 can be guided along the guide groove 50 to the retainer side oil supplying passage 49 without waste to efficiently lubricate the shaft bearing 44 with a large volume of the lubricant oil G.

Therefore, the retainer side oil supplying passage 49 can be provided in any circumferential position, not directly under the spindle side oil supplying passage 48. As a result, the configuration of the retainer 42 can be formed in such a manner as to be excellent in machining and assembling properties to contribute to reduction of the manufacturing costs of the entire vehicle drive unit 11.

The large diameter opening 49A is provided at the one end side of the retainer side oil supplying passage 49 and the inner diameter dimension D of the large diameter opening 49A is set larger than the width dimension W of the guide groove 50. As a result, the lubricant oil G flowing in the guide groove 50 can be efficiently introduced through the large diameter opening 49A to the retainer side oil supplying passage 49. Therefore, the shaft bearing 44 can be stably lubricated with a large volume of the lubricant oil G to improve durability of the shaft bearing 44.

Further, the sleeve collar portion 41B is provided in the sleeve 41 constituting a part of the shaft 19 and the retainer collar portion 42B is provided in the retainer 42 retaining the shaft bearing 44. Accordingly, the sleeve collar portion 41B and the retainer collar portion 42B can prevent the lubricant oil G supplied to the shaft beating 44 through the retainer side oil supplying passage 49 from flowing out to the side of the wheel drive motor 18 or the side of the wheel drive motor 18 along the shaft 19 to protect the wheel drive motor 18 composed of the electric motor from the lubricant oil G.

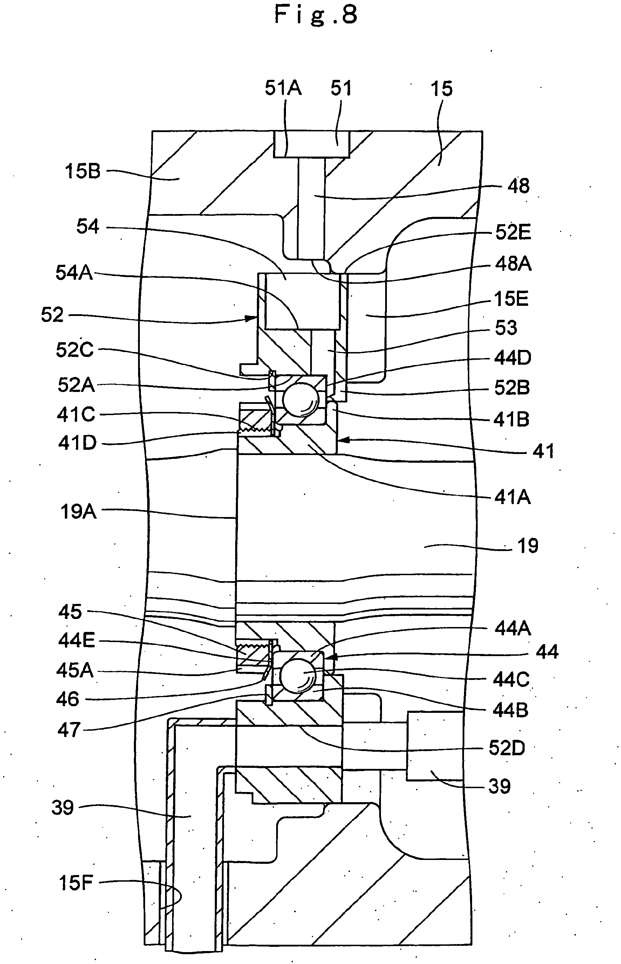

Next, Fig. 8 shows a second embodiment of the present invention and the present embodiment is characterized by providing an initial oil reservoir for reserving lubricant oil in the top portion of the spindle and providing an intermediate oil reservoir for reserving lubricant oil on the outer peripheral surface of the retainer. It should be noted that in the present embodiment, the component elements that are identical to those of the foregoing first embodiment will be simply denoted by the same reference numerals to avoid repetitions of similar explanations.

In the drawing, denoted at 51 is the initial oil reservoir provided in the top portion of the spindle 15 and the initial oil reservoir 51 is formed on the upper surface of the small diameter cylinder portion 15B constituting the spindle 15 to reserve the lubricant oil G scattered on the upper surface of the spindle 15 at the time of operating the respective planetary gear reduction mechanisms 21 and 29. The initial oil reservoir 51 is recessed on the upper surface of the small diameter cylinder portion 15B as a circular bottomed hole having an inner diameter dimension larger than the spindle side oil supplying passage 48, and an upper end side of the spindle side oil supplying passage 48 is opened to a bottom surface 51A of the initial oil reservoir 51.

Denoted at 52 is a retainer for retaining the shaft bearing 44. The retainer 52 is used in the present embodiment in place of the retainer 42 in the first embodiment. Here, the retainer 52 is formed of a short diameter cylindrical body as a whole. The retainer 52 is constituted by a bearing fitting hole portion 52A into which the outer race 44B of the shaft bearing 44 is fitted and a disk-shaped retainer collar portion 52B extending from the inner peripheral side of the bearing fitting hole portion 52A to the radially inside. An annular groove portion 52C is formed on the inner peripheral surface of the bearing fitting hole portion 52A for mounting the stop ring 47.

On the other hand, a plurality of bolt through holes (not shown) are formed in the retainer 52 to axially penetrate therethrough. By the bolts inserted into the respective bolt through holes, the retainer 52 is fixed to the intermediate flange 15E of the spindle 15. Two pipe mounting holes 52D (only the lower hole is shown) are formed in the retainer 52 at its upper and lower sides to sandwich the bearing fitting hole portion 52A in between. An intermediate oil reservoir 54 to be described later is provided on an outer peripheral surface 52E of the retainer 52.

Denoted at 53 is a retainer side oil supplying passage provided in the retainer 52. The retainer side oil supplying passage 53 serves to supply the lubricant oil G flown down through the spindle side oil supplying passage 48 to the retainer 52 to the shaft bearing 44. The retainer side oil supplying passage 53 is, in the same way as the retainer side oil supplying passage 49 in the first embodiment, formed in the retainer 52 at a portion spaced circumferentially from the upmost portion for avoiding interference with the supply pipe 40, and penetrates radially from the outer peripheral surface 52E of the retainer 52 to its inner peripheral surface in a state of being inclined in the vertical direction.

One end side (upper end side) of the retainer side oil supplying passage 53 opened to a bottom surface 54A of the intermediate oil reservoir 54 to be described later and the other end side (lower end side) of the retainer side oil supplying passage 53 is opened in a gap between the inner race 44A and the outer race 44B of the shaft bearing 44.

Denoted at 54 is the intermediate oil reservoir provided on the outer peripheral surface 52E of the retainer 52. The intermediate oil reservoir 54 is located between the spindle side oil supplying passage 48 and the retainer side oil supplying passage 53 for reserving the lubricant oil G. The intermediate oil reservoir 54 is formed as a circular bottomed hole having an inner diameter dimension larger than the retainer side oil supplying passage 53, and one end side of the retainer side oil supplying passage 53 is opened to the bottom surface 54A of the intermediate oil reservoir 54.

The intermediate oil reservoir 54 all the time holds a constant amount of the lubricant oil G therein by introducing the lubricant oil G flown down through the spindle side oil supplying passage 48 to the outer peripheral surface 52E of the retainer 52, thus stably supplying the lubricant oil G to the shaft bearing 44.

The vehicle drive unit according to the second embodiment has the aforementioned configuration, which is not so much different from the first embodiment in regard to a basic operation that the lubricant oil G scattered on the upper surface of the spindle 15 is supplied through the spindle side oil supplying passage 48, the retainer side oil supplying passage 53 and the like to the shaft bearing 44.

In this way, the second embodiment is configured in such a manner that the initial oil reservoir 51 is provided on the upper surface of the small diameter cylinder portion 15B in the spindle 15 and the intermediate oil reservoir 54 is provided on the outer peripheral surface 52E of the retainer 52. Therefore, the lubricant oil G scattered on the upper surface of the spindle 15 can be introduced to the spindle side oil supplying passage 48 in a state of being collected using the initial oil reservoir 51 and the lubricant oil G flown down from the spindle side oil supplying passage 48 to the outer peripheral surface 52E of the retainer 52 can be introduced to the retainer side oil supplying passage 53 in a state of being collected using the intermediate oil reservoir 54. As a result, a large volume of the lubricant oil G can be efficiently supplied to the shaft bearing 44.

In addition, since the lubricant oil G can be retained in the initial oil reservoir 51 and the intermediate oil reservoir 54, the lubricant oil G can be stably supplied to the shaft bearing 44 regardless of a driving condition (driving posture) of the dump truck 1. Thereby reliability of the shaft bearing 44 can be furthermore enhanced.

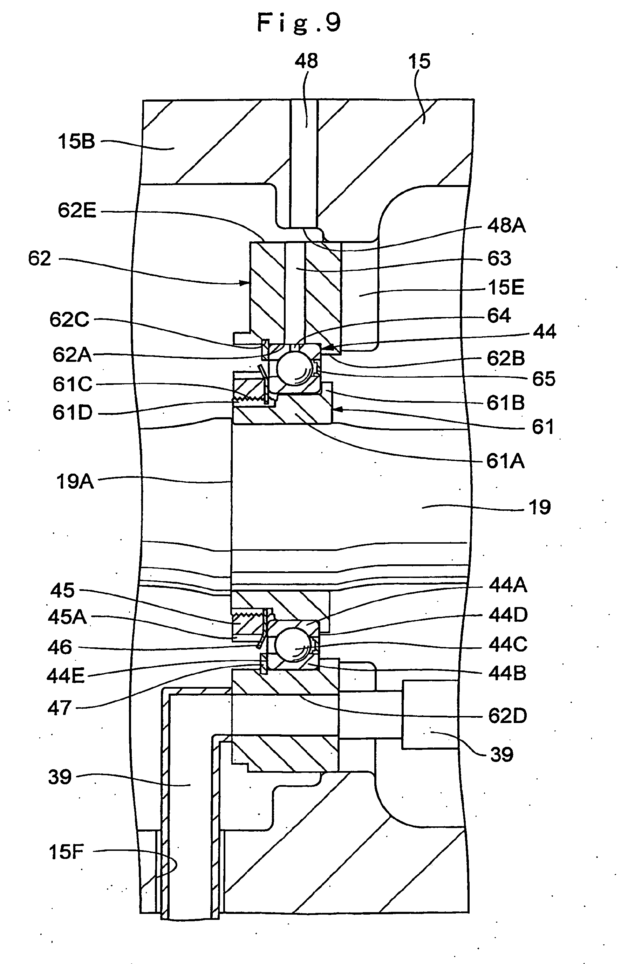

Next, Fig. 9 shows a third embodiment of the present invention and the present embodiment is characterized by providing the outer race of the shaft bearing with a through hole communicating with the retainer side oil supplying passage and providing a seal at the side of the wheel drive motor among axially both sides of the shaft bearing. It should be noted that in the present embodiment, the component elements that are identical to those of the foregoing first embodiment will be simply denoted by the same reference numerals to avoid repetitions of similar explanations.

In the drawing, denoted at 61 is a sleeve positioned at the intermediate portion 19A of the shaft 19 and provided integrally with the shaft 19, which is used in the present embodiment in place of the sleeve 41 of the first embodiment. Here, the sleeve 61 is formed in a stepped cylindrical shape as a whole, and the sleeve 61 is configured by a bearing fitting portion 61A on which the inner peripheral side of the shaft bearing 44 (inner race 44A) is fitted, an engaging step portion 61B which is formed in a disk-shape having a diameter slightly larger than that of the bearing fitting portion 61A and to which an axial end surface of the inner race 44A in the shaft bearing 44 is engaged, a male screw portion 61C threaded with the nut 45, and a groove portion 61D to which the rotation-preventing plate 46 is engaged.

Denoted at 62 is a retainer for retaining the shaft bearing 44. The retainer 62 is used in the present embodiment in place of the retainer 42 in the first embodiment. Here, the retainer 62 is formed of a short diameter cylindrical body as a whole. The retainer 62 is constituted by a bearing fitting hole portion 62A into which the outer race 44B of the shaft bearing 44 is fitted and an engaging step portion 62B which extends from the inner peripheral side of the bearing fitting hole portion 62A to the radially inside and to which the axial end surface of the outer race 44B in the shaft bearing 44 is engaged. Further, an annular groove portion 62C is formed on the inner peripheral surface of the bearing fitting hole portion 62A for mounting the stop ring 47.

Here, a plurality of bolt through holes are formed in the retainer 62 to axially penetrate therethrough. By the bolts inserted into the respective bolt through holes, the retainer 62 is fixed to the intermediate flange 15E of the spindle 15. Two pipe mounting holes 62D (only the lower hole is shown) are formed in the retainer 62 at its upper and lower sides to sandwich the bearing fitting hole portion 62A in between.

Denoted at 63 is a retainer side oil supplying passage provided in the retainer 62. The retainer side oil supplying passage 63 serves to supply the lubricant oil G flown down through the spindle side oil supplying passage 48 to the retainer 62 to the shaft bearing 44. The retainer side oil supplying passage 63 is, in the same way as the retainer side oil supplying passage 49 in the first embodiment, formed in the retainer 62 at a portion spaced circumferentially from the upmost portion for avoiding interference with the supply pipe 40, and penetrates radially from an outer peripheral surface 62E of the retainer 62 to its inner peripheral surface in a state of being inclined in the vertical direction.

Denoted at 64 is a through hole formed in the outer race 44B of the shaft bearing 44. The through hole 64 axially penetrates through the outer race 44B and is communicated with the retainer side oil supplying passage 63. In consequence, the lubricant oil G introduced to the retainer side oil supplying passage 63 is supplied between the inner race 44A and the outer race 44B through the through hole 64 of the shaft bearing 44 to lubricate the rolling surface of each rolling body 44C directly.

Denoted at 65 is a seal provided in one side end surface 44D positioned in the side of the wheel drive motor 18 (see Fig. 4) among end surfaces at axially both ends of the shaft bearing 44. The seal 65 is formed of a ring-shaped plate corresponding to a gap between the inner race 44A and the outer race 44B and is disposed in such a manner as to fill the gap between the inner race 44A and the outer race 44B. On the other hand, the gap between the inner race 44A and the outer race 44B is opened in the other side end surface 44E positioned in the side of the reduction gear 20 (see Fig. 4) among the end surfaces at the axially both sides of the shaft bearing 44.

The lubricant oil G supplied between the inner race 44A and the outer race 44B through the through hole 64 of the shaft bearing 44 can be blocked by the seal 65 to restrict the lubricant oil G to flow out to the side of the wheel drive motor 18.

The vehicle drive unit according to the third embodiment has the aforementioned configuration in which the lubricant oil G scattered on the upper surface of the spindle 15 is introduced into the through hole 64 of the shaft bearing 44 through the spindle side oil supplying passage 48 of the spindle 15 and the retainer side oil supplying passage 63 of the retainer 62. In consequence, the lubricant oil G can be supplied between the inner race 44A and the outer race 44B of the shaft bearing 44 through the through hole 64 to lubricate the rolling surface of each rolling body 44C directly. Therefore, reliability of the shaft bearing 44 can be furthermore enhanced.

In this case, the seal 65 is provided in the one side end surface 44D positioned in the side of the wheel drive motor 18 among the end surfaces at the axially both sides of the shaft bearing 44. The seal 65 closes the gap between the inner race 44A and the outer race 44B. On the other hand, the gap between the inner race 44A and the outer race 44B is opened in the other side end surface 44E positioned in the side of the reduction gear 20 among the end surfaces at the axially both sides of the shaft bearing 44.

In consequence, since the lubricant oil G supplied between the inner race 44A and the outer race 44B of the shaft bearing 44 is blocked by the seal 65 disposed in the one side end surface 44D of the shaft bearing 44, the lubricant oil G flows down from the other side end surface 44E of the shaft bearing 44 to the side of the reduction gear 20. Therefore, the seal 65 can prevent the lubricant oil G which has lubricated the shaft bearing 44 from flowing out to the side of the wheel drive motor 18 or along the shaft 19 to the side of the wheel drive motor 18 to protect the wheel drive motor 18 as the electric motor from the lubricant oil G.

It should be noted that the first embodiment shows an example where the retainer 42 formed of a member different from the spindle 15 is mounted on the inner peripheral side of the spindle 15 (small diameter cylinder portion 15B) for retaining the shaft bearing 44, and the lubricant oil G introduced into the spindle side oil supplying passage 48 of the spindle 15 is supplied through the retainer side oil supplying passage 49 provided in the retainer 42 to the shaft bearing 44.

However, the present invention is not limited to this particular example. For instance, a configuration may be applied where a bearing retaining portion is formed integrally with the inner peripheral side of the small diameter cylinder portion 15B which constitutes the spindle 15 and the bearing retaining portion retains the shaft bearing 44. In this case, since the retainer as the separate member is not necessary, the lubricant oil can be supplied to the shaft bearing 44 by using only the spindle side oil supplying passage provided in the spindle.

The second embodiment exemplifies a case where only the intermediate oil reservoir 54 is provided on the outer peripheral surface 52E of the retainer 52, and the present invention is not limited to this particular example. For instance, a configuration may be applied where the guide groove is provided over the entirety of the outer peripheral surface 52E of the retainer 52 in addition, for example, to the intermediate oil reservoir 54. This configuration may be applied to the retainer 62 according to the third embodiment.

The first embodiment exemplifies a case where the sleeve collar portion 41B is provided in the sleeve 41 constituting a part of the shaft 19 and the retainer collar portion 42B is provided in the retainer 42 for retaining the shaft bearing 44. However, the present invention is not limited to this particular example. For instance, a configuration may be applied where only any one of the sleeve collar portion 41B and the retainer collar portion 42B is provided.

The first embodiment exemplifies a case where the retainer side oil supplying passage 49 is formed in the retainer 42 at a portion thereof spaced circumferentially from the upmost portion for avoiding interference with the supply pipe 40. However, the present invention is not limited to this particular example. For instance, a configuration may be applied where the retainer side oil supplying passage 49 is provided in the upmost portion of the retainer 42 and, on the other hand, the supply pipe 40 and the pipe mounting hole 42E are provided in a portion spaced circumferentially from the upmost portion of the retainer 42. This configuration may be applied to the second and third embodiments.

Further, each of the aforementioned embodiments exemplifies a case of using the wheel drive motor 18 composed of the electric motor as the rotational source. However, the present invention is not limited to this particular example. For instance, a configuration may be applied where a hydraulic motor and the like are used as the rotational source.

### DESCRIPTION OF REFERENCE NUMERALS

- 1:: Dump truck
- 2:: Vehicle body
- 11:: Vehicle drive unit
- 12:: Wheel
- 15:: Spindle
- 16, 17:: Wheel bearing
- 18:: Wheel drive motor (Rotational source)
- 18B:: Rotational shaft
- 19:: Shaft
- 19A:: Intermediate portion

- 20:: Reduction gear
- 21, 29:: Planetary gear reduction mechanism
- 41, 61:: Sleeve
- 41B:: Sleeve collar portion (Collar portion)
- 42, 52, 62:: Retainer
- 42B, 52B:: Retainer collar portion (Collar portion)
- 42G, 52E, 62E:: Outer peripheral surface
- 44:: Shaft bearing
- 44A:: Inner race
- 44B:: Outer race
- 44C:: Rolling body
- 48:: Spindle side oil supplying passage
- 49, 53, 63:: Retainer side oil supplying passage
- 50:: Guide groove
- 51:: Initial oil reservoir
- 54:: Intermediate oil reservoir
- 64:: Through hole
- 65:: Seal

## Claims

1. A vehicle drive unit for a dump truck comprising: a wheel (12) in which a tire (7A) is installed; a cylindrical spindle (15) inserted inside said wheel (12); wheel bearings (16), (17) provided between an outer peripheral surface of said spindle (15) and an inner peripheral surface of said wheel (12) to rotatably support said wheel (12); a rotational source (18) disposed at one end side of said spindle (15) to drive a rotational shaft (18B); a shaft (19) connected to said rotational shaft (18B) of said rotational source (18) and inserted into an inner peripheral side of said spindle (15) to axially project from the other end of said spindle (15); and a reduction gear (20) disposed at the other end side of said spindle (15) to transmit power from said shaft (19) to said wheel (12) in a state of being immersed in lubricant oil (G);
a shaft bearing (44) is provided on an axial intermediate portion (19A) of said shaft (19) to be positioned in an inner peripheral side of said spindle (15) for rotatably supporting said shaft (19) to said spindle (15);
**characterized in that**:
a spindle side oil supplying passage (48) is formed in a top portion of said spindle (15) for establishing communications between an outer peripheral side and the inner peripheral side of said spindle (15);
said lubricant oil (G) supplied to the top portion of said spindle (15) by rotation of said wheel (12) is introduced to said shaft bearing (44) by use of said spindle side oil supplying passage (48).

2. A vehicle drive unit for a dump truck according to claim 1, wherein said spindle side oil supplying passage (48) is provided in a position as opposed to said shaft bearing (44) in the upper and lower directions.

3. A vehicle drive unit for a dump truck according to claim 1 or 2, further comprising: a retainer (42), (52), (62) provided in the inner peripheral side of said spindle (15) for retaining said shaft bearing (44),
wherein a retainer side oil supplying passage (49), (53), (63) is formed in said retainer (42), (52), (62) for introducing said lubricant oil (G) flown out from said spindle side oil supplying passage (48) into a rolling surface of said shaft bearing (44).

4. A vehicle drive unit for a dump truck according to claim 3, wherein said retainer (42) has an outer peripheral surface (42G) on which one end side of said retainer side oil supplying passage (49) is opened and which includes a guide groove (50) formed thereon for flowing down said lubricant oil (G) supplied from said spindle side oil supplying passage (48) to the one end side of said retainer side oil supplying passage (49).

5. A vehicle drive unit for a dump truck according to claim 4, herein said retainer side oil supplying passage (49) has an opening width dimension (D) at the one end side set larger than a width dimension (W) of said guide groove (50) in said retainer (42).

6. A vehicle drive unit for a dump truck according to at least one of claims 3 to 5,
wherein an intermediate oil reservoir (54) is formed on an outer peripheral surface (52E) of said retainer (52) to be positioned between said spindle side oil supplying passage (48) and said retainer side oil supplying passage (53) for reserving said lubricant oil (G).

7. A vehicle drive unit for a dump truck according to at least one of claims 3 to 6,
wherein said shaft (19) and/or said retainer (42), (52), is provided with a collar portion (41B), (42B), (52B) positioned in said rotational source (18) side among axially both sides of sold shaft bearing (44) for restricting said lubricant oil (G) supplied to said shaft bearing (44) to flow out to said rotational source (18) side.

8. A vehicle drive unit for a dump truck according to at least one of claims 3 to 7,
wherein said shaft bearing (44) comprises: an inner race (44A) rotating together with said shaft (19); an outer race (44B) fixed to said spindle (15) side; and rolling bodies (44C) provided between said inner race (44A) and said outer race (44B) to rotatably support said inner race (44A),
wherein a through hole (64) is formed in said outer race (44B) of said shaft bearing (44) to radially penetrate therein
for establishing communications between said through hole (64) and said retainer side oil supplying passage (63) of said retainer (62).

9. A vehicle drive unit for a dump truck according to claim 8, wherein said shaft bearing (44) includes a seal (65) provided only at said rotational source (18) side among the axially both sides thereof.

10. A vehicle drive unit for a dump truck according to at least one of claims 1 to 9,
wherein an initial oil reservoir (51) is provided on the top portion of said spindle (15) to be positioned at the outer peripheral side of said spindle (15) for reserving said lubricant oil (G) to be supplied to said spindle side oil supplying passage (48).

## Patentansprüche

1. Fahrzeugantriebseinheit für einen Kipper, mit: einem Rad (12), in dem ein Reifen (7A) eingebaut ist; einer zylindrischen Spindel (15), die in dem Rad (12) eingefügt ist; Radlager (16), (17), die zwischen einer Außenumfangsfläche der Spindel (15) und einer Innenumfangsfläche des Rads (12) vorgesehen sind, um das Rad (12) drehbar zu lagern; einer Drehquelle (18), die an einer Endseite der Spindel (15) angeordnet ist, um eine Drehwelle (18B) anzutreiben; einer Welle (19), die mit der Drehwelle (18B) der Drehquelle (18) verbunden und in eine Innenumfangsseite der Spindel (15) eingefügt ist, so dass sie axial vom anderen Ende der Spindel (15) vorsteht; und einem Untersetzungsgetriebe (20), das auf der anderen Endseite der Spindel (15) angeordnet ist, um Leistung von der Welle (19) zum Rad (12) in einem Zustand des in Schmieröl (G) Eingetauchtseins zu übertragen;
ein Wellenlager (44) ist auf einem axialen Zwischenabschnitt (19A) der Welle (19) vorgesehen, um in einer Innenumfangsseite der Spindel (15) zum drehbaren Halten der Welle (19) in der Spindel (15) positioniert zu werden;
**dadurch gekennzeichnet, dass** ein spindelseitiger Ölversorgungsdurchgang (48) in einem oberen Abschnitt der Spindel (15) ausgebildet ist, um eine Verbindung zwischen einer Außenumfangsseite und der Innenumfangsseite der Spindel (15) herzustellen;
das Schmieröl (G), das dem oberen Abschnitt der Spindel (15) durch Drehung des Rads (12) zugeführt wird, in das Wellenlager (44) durch Verwendung des spindelseitigen Ölversorgungsdurchgangs (48) eingeleitet wird.

2. Fahrzeugantriebseinheit für einen Kipper nach Anspruch 1, wobei der spindelseitige Ölversorgungsdurchgang (48) in einer Position vorgesehen ist, die dem Wellenlager (44) in oberer und unterer Richtung gegenüberliegt.

3. Fahrzeugantriebseinheit für einen Kipper nach Anspruch 1 oder 2, weiterhin mit:
einer Halterung (42), (52), (62), die in der Innenumfangsseite der Spindel (15) vorgesehen ist, um das Wellenlager (44) zu halten,
wobei ein halterungsseitiger Ölversorgungsdurchgang (49), (53), (63) in der Halterung (42), (52), (62) zum Einleiten des aus dem spindelseitigen Ölversorgungsdurchgang (48) geflossenen Schmieröls (G) in eine Rollfläche des Wellenlagers (44) ausgebildet ist.

4. Fahrzeugantriebseinheit für einen Kipper nach Anspruch 3, wobei die Halterung (42) eine Außenumfangsfläche (42G) aufweist, auf der eine Endseite des halterungsseitigen Ölversorgungsdurchgangs (49) geöffnet ist und die eine auf ihr ausgebildete Führungsnut (50) beinhaltet, um das vom spindelseitigen Ölversorgungsdurchgang (48) zugeführte Schmieröl (G) zu der einen Endseite des halterungsseitigen Ölversorgungsdurchgangs (49) hinunterfließen zu lassen.

5. Fahrzeugantriebseinheit für einen Kipper nach Anspruch 4, wobei der halterungsseitige Ölversorgungsdurchgang (49) eine Öffnungsbreitendimension (D) auf der einen Endseite aufweist, die größer als eine Breitendimension (W) der Führungsnut (50) in der Halterung (42) eingestellt ist.

6. Fahrzeugantriebseinheit für einen Kipper nach mindestens einem der Ansprüche 3 bis 5, wobei ein Zwischenölbehälter (54) auf einer Außenumfangsfläche (52E) der Halterung (52) ausgebildet ist, der zwischen dem spindelseitigen Ölversorgungsdurchgang (48) und dem halterungsseitigen Ölversorgungsdurchgang (53) zum Aufbewahren des Schmieröls (G) zu positionieren ist.

7. Fahrzeugantriebseinheit für einen Kipper nach mindestens einem der Ansprüche 3 bis 6, wobei die Welle (19) und/oder die Halterung (42), (52) mit einem Kragenabschnitt (41B), (42B), (52B) versehen ist, der auf der Seite der Drehquelle (18) unter axial beiden Seiten des Wellenlagers (44) positioniert ist, um das dem Wellenlager (44) zugeführte Schmieröl (G) einzugrenzen, so dass es aus der Seite der Drehquelle (18) fließt.

8. Fahrzeugantriebseinheit für einen Kipper nach mindestens einem der Ansprüche 3 bis 7, wobei das Wellenlager (44) umfasst: eine Innenlauffläche (44A), die sich zusammen mit der Welle (19) dreht; eine Außenlauffläche (44B), die auf der Seite der Spindel (15) befestigt ist; und Rollkörper (44C), die zwischen der Innenlauffläche (44A) und der Außenlauffläche (44B) vorgesehen sind, um die Innenlauffläche (44A) drehbar zu halten,
wobei ein Durchgangsloch (64) in der Außenlauffläche (44B) des Wellenlagers (44) ausgebildet ist, um radial durch dieses hindurchzugehen, um eine Verbindung zwischen dem Durchgangsloch (64) und dem halterungsseitigen Ölversorgungsdurchgang (63) der Halterung (62) herzustellen.

9. Fahrzeugantriebseinheit für einen Kipper nach Anspruch 8, wobei das Wellenlager (44) eine Abdichtung (65) beinhaltet, die nur auf der Seite der Drehquelle (18) unter ihren axialen beiden Seiten vorgesehen ist.

10. Fahrzeugantriebseinheit für einen Kipper nach mindestens einem der Ansprüche 1 bis 9, wobei ein Anfangsölbehälter (51) auf dem oberen Abschnitt der Spindel (15) vorgesehen ist, um auf der Außenumfangsseite der Spindel (15) zum Aufbewahren des Schmieröls (G) positioniert zu werden, das dem spindelseitigen Ölversorgungsdurchgang (48) zugeführt werden soll.

## Revendications

1. Unité de commande de véhicule pour un camion-benne comportant : une roue (12) dans laquelle un pneu (7A) est installé, une fusée cylindrique (15) insérée à l'intérieur de ladite roue (12), des roulements de roue (16), (17) agencés entre une surface périphérique extérieure de ladite fusée (15) et une surface périphérique intérieure de ladite roue (12) pour supporter en rotation ladite roue (12), une source de rotation (18) disposée au niveau d'un côté d'extrémité de ladite fusée (15) pour entraîner un arbre de rotation (18B), un arbre (19) relié audit arbre de rotation (18B) de ladite source de rotation (18) et inséré dans un côté de périphérique intérieur de ladite fusée (15) pour faire saillie axialement depuis l'autre extrémité de ladite fusée (15), et un engrenage de réduction (20) disposé au niveau de l'autre côté d'extrémité de ladite fusée (15) pour transmettre de la puissance depuis ledit arbre (19) à ladite roue (12) dans un état d'immersion dans une huile lubrifiante (G),
un palier d'arbre (44) est agencé sur une partie intermédiaire axiale (19A) dudit arbre (19) positionné dans un côté périphérique intérieur de ladite fusée (15) pour supporter en rotation ledit arbre (19) sur ladite fusée (15),
**caractérisée en ce que** un passage d'alimentation en huile du côté fusée (48) est formé dans une partie supérieure de ladite fusée (15) pour établir des communications entre un côté périphérique extérieur et le côté périphérique intérieur de ladite fusée (15),
ladite huile lubrifiante (G) délivrée à la partie supérieure de ladite fusée (15) par rotation de ladite roue (12) est introduite dans ledit palier d'arbre (44) en utilisant ledit passage d'alimentation en huile du côté fusée (48).

2. Unité de commande de véhicule pour un camion-benne selon la revendication 1, dans lequel ledit passage d'alimentation en huile du côté fusée (48) est agencée dans une position opposée audit palier d'arbre (44) dans les directions supérieure et inférieure.

3. Unité de commande de véhicule pour un camion-benne selon la revendication 1 ou 2, comportant en outre : un dispositif de retenue (42), (52), (62) agencé dans le côté périphérique intérieur de ladite fusée (15) pour retenir ledit palier d'arbre (44),
dans lequel un passage d'alimentation en huile du côté dispositif de retenue (49), (53), (63) est formé dans ledit dispositif de retenue (42), (52), (62) pour introduire ladite huile lubrifiante (G) s'écoulant depuis ledit passage d'alimentation en huile du côté fusée (48) dans une surface de roulement dudit palier d'arbre (44).

4. Unité de commande de véhicule pour un camion-benne selon la revendication 3, dans lequel ledit dispositif de retenue (42) a une surface périphérique extérieure (42G) sur laquelle un côté d'extrémité dudit passage d'alimentation en huile du côté dispositif de retenue (49) est ouvert et qui inclut une rainure de guidage (50) formée sur celui-ci pour faire circuler vers le bas l'huile lubrifiante (G) délivrée depuis ledit passage d'alimentation en huile du côté fusée (48) vers le côté d'extrémité dudit passage d'alimentation en huile du côté dispositif de retenue (49).

5. Unité de commande de véhicule pour un camion-benne selon la revendication 4, dans lequel ledit passage d'alimentation en huile du côté dispositif de retenue (49) a une dimension de largeur d'ouverture (D) au niveau du côté d'extrémité défini pour être supérieure à une dimension de largeur (W) de ladite rainure de guidage (50) dans ledit dispositif de retenue (42).

6. Unité de commande de véhicule pour un camion-benne selon au moins l'une des revendications 3 à 5, dans laquelle un réservoir d'huile intermédiaire (54) est formé sur une surface périphérique extérieure (52E) dudit dispositif de retenue (52) à positionner entre ledit passage d'alimentation en huile du côté fusée (48) et ledit passage d'alimentation en huile du côté dispositif de retenue (53) pour contenir ladite huile lubrifiante (G).

7. Unité de commande de véhicule pour un camion-benne selon au moins l'une des revendications 3 à 6, dans lequel ledit arbre (19) et/ou ledit dispositif de retenue (42), (52) est muni d'une partie d'embase (41B), (42B), (52B) positionnée dans ledit côté de source de rotation (18) axialement entre les deux côtés dudit palier d'arbre (44) pour limiter l'écoulement de ladite huile lubrifiante (G) délivrée audit palier d'arbre (44) vers ledit côté de source de rotation (18).

8. Unité de commande de véhicule pour un camion-benne selon au moins l'une des revendications 3 à 7, dans lequel ledit palier d'arbre (44) comporte : une voie de roulement intérieure (44A) tournant conjointement avec ledit arbre (19), une voie de roulement extérieure (44B) fixée audit côté de fusée (15), et des corps de roulement (44C) agencés entre ladite voie de roulement intérieure (44A) et ladite voie de roulement extérieure (44B) pour supporter en rotation ladite voie de roulement intérieure (44A),
dans laquelle un trou traversant (64) est formé dans ladite voie de roulement extérieure (44B) dudit palier d'arbre (44) pour pénétrer radialement dans celle-ci afin d'établir des communications entre ledit trou traversant (64) et ledit passage d'alimentation en huile du côté dispositif de retenue (63) dudit dispositif de retenue (62).

9. Unité de commande de véhicule pour un camion-benne selon la revendication 8, dans lequel ledit palier d'arbre (44) inclut un joint (65) agencé uniquement au niveau dudit côté de source de rotation (18) axialement entre les deux côtés correspondants.

10. Unité de commande de véhicule pour un camion-benne selon au moins l'une des revendications 1 à 9, dans lequel un réservoir d'huile initial (51) est agencé sur la partie supérieure de ladite fusée (15) à positionner au niveau du côté périphérique extérieur de ladite fusée (15) pour contenir ladite huile lubrifiante (G) à délivrer audit passage d'alimentation en huile du côté fusée (48).
